# FASCICULE DE BREVET EUROPEEN

(11) **EP 3 094 014 B1**
(45) Date de publication et mention de la délivrance du brevet: **28.03.2018**
(21) Numéro de dépôt: 16170881.3
(22) Date de dépôt: 16.12.2010
(51) Int. Cl.: H04B 7/185

(54) **SYSTÈME SPATIAL HYBRIDE BASÉ SUR UNE CONSTELLATION DE SATELLITES EN ORBITE BASSE AGISSANT COMME RÉPÉTEURS SPATIAUX POUR AMÉLIORER L'ÉMISSION ET LA RÉCEPTION DE SIGNAUX GÉOSTATIONNAIRES**
HYBRID-WELTRAUM-FUNKSYSTEM, DAS AUF EINER KONSTELLATION VON SATELLITEN IN NIEDRIGER UMLAUFBAHN BASIERT, DIE ALS WELTRAUMVERSTÄRKER ZUR VERBESSERUNG DES SENDENS UND EMPFANGENS VON GEOSTATIONÄREN SIGNALEN FUNGIEREN
HYBRID SPATIAL SYSTEM BASED ON A CONSTELLATION OF SATELLITES IN LOW EARTH ORBIT ACTING AS SPATIAL REPEATERS TO IMPROVE THE TRANSMISSION AND RECEPTION OF GEOSTATIONARY SIGNALS

(30) Priorité: 17.12.2009 FR 0959116
(43) Date de publication de la demande: 16.11.2016
(62) Demande divisionnaire de: 10798759.6
(73) Titulaire: Airbus Defence and Space SAS, 31402 Toulouse Cedex 4 (FR)
(72) Inventeur: TRONC, Jérome, 31240 SAINT JEAN (FR)
(74) Mandataire: Ipside

(56) Documents cités:
- EP-A2- 0 845 876
- WO-A1-98/27672
- WO-A2-95/35602
- WO-A2-2008/108885
- GB-A- 2 319 700
- US-A- 5 758 261
- US-A- 5 839 053
- US-A- 6 023 605
- US-B1- 6 556 828

## Description

L'invention relève du domaine des systèmes de transmission de données à grande distance. Elle concerne plus particulièrement les systèmes et procédés de communications de données (transfert de donnée, télécommande, suivi de terminaux...) entre des utilisateurs dotés de petits terminaux mobiles.

### Contexte de l'invention et problème posé

La question de la transmission de données à grande distance depuis ou vers un terminal mobile, se pose en particulier pour les liaisons entre ordinateurs (machine to machine). Ce domaine de transmission est alors caractérisé par un besoin de débit de données nettement plus faible que pour des liaisons de type image ou Internet.

On connait une première approche de ce problème, suivie par des systèmes existants de transmission de données tels qu'Orbcomm et Argos, lesquelles utilisent des constellations de satellites en orbite basse (LEO de l'anglais Low Earth Orbit). Dans cette approche, le mode normal de fonctionnement de chaque satellite en orbite basse LEO requiert qu'il soit, d'une part en visibilité simultanée d'une station sol de contrôle et de connexion, et d'autre part d'un terminal utilisateur.

Le satellite sert alors de lien de communication entre les deux parties, et le temps de latence des accusés de réception et des messages est fonction de la distance entre le satellite et la station sol (GES de l'anglais Gateway Earth Station).

Cependant, la couverture fournie par le réseau de stations sol des systèmes utilisant des satellites en orbite basse, tels qu'Orbcomm et Argos, est limitée par le déploiement de stations sols (GES) et les systèmes existants fournissent seulement une couverture limitée de la Terre dans ce mode. Chaque station sol permet en effet une couverture sur un rayon d'environ 3000 km, et chacun de ces systèmes comporte une vingtaine de stations sol.

On constate alors aisément que les zones de couvertures présentent de larges zones "blanches" pour lesquelles le système n'est pas utilisable. Ces zones couvrent en particulier une large part des zones océaniques, voire une partie significative de zones continentales telles que l'Afrique ou l'Australie.

Dans les cas pour lesquels le satellite LEO n'a pas de visibilité simultanée du terminal utilisateur et de la station de contrôle sol (GES), il est nécessaire d'utiliser une méthode de communication de type stockage et envoi (méthode connu de l'homme de l'art sous le nom Store & Forward). Dans cette méthode, le message est stocké à bord du satellite, qui continue son déplacement sur son orbite jusqu'à ce qu'il survole la station sol GES à laquelle il délivre le message stocké.

Avec cette méthode d'opérations, les délais de communications sont longs et rendent difficiles des communications bidirectionnelles dans des conditions acceptables, étant donné que les délais sont typiquement compris entre quelques minutes et les 100 à 150 minutes de durée d'une orbite complète du satellite LEO.

On connait par ailleurs des exemples de systèmes de télécommunications hybrides pour la transmission de données entres utilisateurs. Ces systèmes hybrides sont composés de satellites géostationnaires et d'une constellation de satellite en orbite basse.

On peut citer notamment un premier document de brevet FR 2764755 / US 6208625 : *Method and apparatus for increasing call-handling capacity using a multi-tier satellite network*

Ce document décrit un réseau formé de satellites LEO et géostationnaires (GEO) capables de communiquer entre eux. Au sol, des terminaux utilisateurs sont capables de réception / transmission (Rx/Tx) avec les satellites LEO et GEO. La composante LEO réalise un filtrage du trafic reçu depuis les terminaux, et en fonction de l'aspect urgent du trafic reçu, elle aiguille ce trafic soit en interne vers le LEO soit vers le GEO.

Dans un second document de brevet, EP 0883252 / US 6339707 : *Method and system for providing wideband communications to mobile users in a satellite-based network,* il est proposé un système de communication par satellite permettant une couverture globale, une réduction du délai de transmission (Tx), et une maximisation de l'utilisation de la capacité du système (communication satellite large bande par l'interconnexion de plusieurs constellations en orbite moyenne -MEO- et géostationnaire -GEO-).

Les satellites MEO et GEO communiquent directement entre eux par des liens inter-satellites, ce qui permet un routage du trafic (pour la voix et pour les données) à bord des satellites en fonction de certaines règles.

En outre, ce document propose un partage et une réutilisation du spectre entre les satellites GEO et MEO à très hautes fréquences (par exemple entre 40 et 60 GHz), afin de permettre la fonction connue sous le nom de "seamless handover" pour les terminaux portables (passage d'un réseau mobile à un réseau fixe sans interruption de communication en cours).

Il est clair que les systèmes hybrides actuels présentent une grande complexité, synonyme de coût élevé de mise en place et d'utilisation.

### Objectifs de l'invention

La présente invention a pour objet de proposer un nouveau système de communications de données entre utilisateurs mobiles.

Un second objectif de l'invention est une amélioration des performances et une diminution du coût d'un système de communications de données entre mobiles.

### Exposé de l'invention

A cet effet, l'invention vise en premier lieu un système de télécommunications, destiné au transfert de données à bas débit entre au moins deux utilisateurs situés sensiblement à la surface d'un corps céleste,

le système comprenant :
une pluralité de terminaux émetteurs / récepteurs de surface associés chacun à un utilisateur,
un ou plusieurs moyens stationnaires au dessus de la surface du corps céleste, ces moyens stationnaires étant aptes à transmettre de données de et vers une zone de couverture déterminée en vue du moyen stationnaire,
et un ou plusieurs moyens de répétition de signaux pour des signaux émis et/ou reçus depuis les moyens stationnaires et les terminaux de surface, ces moyens de répétition défilant au dessus de la surface du corps céleste, une même bande de fréquence étant utilisée pour les communications entre les terminaux de surface et les moyens de répétition et pour les communications entre les moyens de répétition et les moyens stationnaires.

Dans toute la présente demande, on entend par "utilisateurs situés sensiblement à la surface", notamment les utilisateurs terrestres, maritimes ou aéronautiques. De même, les terminaux de surface sont admis être par exemple placés dans des moyens terrestres, maritimes ou aéronautiques.

Selon un mode préféré de réalisation, le système comporte au moins une station sol de connexion (GES) des moyens stationnaires GEO. Les communications entre le sol et les moyens de répétitions spatiaux sont assurés par l'intermédiaire des moyens stationnaires GEO et des stations de connexion GES de ces moyens stationnaires GEO. Ces communications comprennent à la fois les échanges de données entre utilisateurs et potentiellement les communications de télécommande et de télémesure des moyens de répétition spatiaux. Ce mode de réalisation ne nécessite donc pas l'utilisation de station sol de connexion affectée aux moyens de répétition spatiaux.

Il est clair qu'en dehors du cas où les deux utilisateurs disposent de terminaux émetteurs / récepteurs de surface, un utilisateur du système peut également être connecté à un réseau terrestre (IP, PSTN, ...) via une station sol de connexion GES.

Selon une mise en oeuvre préférée, au moins un moyen stationnaire est embarqué sur un satellite en orbite géostationnaire autour du corps céleste.

De même, préférentiellement, au moins un moyen de répétition est embarqué sur un satellite en orbite basse défilante autour du corps céleste.

En d'autres termes, l'invention vise notamment un système de communications de données à distance entre mobiles, le système utilisant des charges utiles embarquées sur un ou plusieurs satellites géostationnaires et sur une constellation de satellites en orbite basse défilante, dans lequel les satellites en orbite défilante agissent comme des répéteurs spatiaux pour les signaux émis et/ou reçus depuis les satellites géostationnaires.

Utiliser des satellites en orbite basse agissant comme des répéteurs / amplificateurs de signaux dans la même bande de fréquence que des satellites géostationnaires permet d'améliorer l'émission ou la réception des signaux provenant des satellites géostationnaires, de manière à obtenir le meilleur compromis en termes de rapport coût / couverture et de services. De ce fait, le système permet d'améliorer les performances des services offerts par le satellite géostationnaire, de créer potentiellement de nouveaux services et d'étendre la couverture du satellite géostationnaire (par exemple aux régions polaires).

La constellation de satellites en orbite basse défilante, agissant comme répéteurs spatiaux peut être dans une mise en oeuvre préférée une constellation LEO (Low Earth Orbit) ou alternativement une constellation MEO (Medium Earth Orbit).

Une amélioration des performances du système par rapport aux systèmes de l'art antérieur, est alors obtenue grâce au fait que le répéteur satellite est plus proche de la Terre que l'orbite géostationnaire, et qu'en conséquence les pertes dues à la propagation des signaux en espace libre sont plus réduites.

Dans une mise en oeuvre avantageuse, au moins un moyen de répétition est embarqué sur un satellite évoluant en orbite polaire ou quasi-polaire (inclinaison de l'orbite supérieure à 70°) autour du corps céleste.

Une orbite polaire permet d'améliorer la couverture des zones de latitude élevée qui ne peuvent pas être desservies dans de bonnes conditions par un satellite géostationnaire.

Cette solution hybride (composante géostationnaire et composante complémentaire spatiale) combine les avantages de chaque constituant en réutilisant le même spectre de fréquences à la fois sur les satellites LEO (ou MEO), sur les satellites GEO (Geostationary Earth Orbit) et sur la liaison relais entre LEO et GEO.

Le spectre de fréquence utilisé pour cette solution hybride peut se situer dans n'importe laquelle des bandes allouées aux services de télécommunications par satellites (des bandes basses par exemple UHF ou VHF, jusqu'aux hautes fréquences telles que les bandes Ka ou Q).

Préférentiellement, la bande de fréquences utilisée est la bande L (entre 0.9 et 2.0 GHz) qui est plus particulièrement appropriée aux communications mobiles par satellites.

Une caractéristique significative de l'invention consiste en effet à partager, sur la liaison utilisateur, la même bande de fréquence entre un satellite géostationnaire et une constellation de satellites en orbite basse. En d'autres termes, on utilise la même bande de fréquence pour les communications entre les utilisateurs et la constellation de satellites LEO que pour les communications entre le satellite GEO et le satellite LEO. Ceci procure un avantage significatif par rapport aux solutions de l'art antérieur.

Une caractéristique secondaire de l'invention, valable lorsque le terminal est dans la zone de couverture du satellite GEO, consiste à utiliser également la même bande de fréquence pour les communications directes entre les utilisateurs et le satellite GEO.

Dans ce cas, la bande de fréquences est également utilisée pour des communications entre des terminaux utilisateurs et au moins un moyen stationnaire.

Selon un mode préféré de réalisation,
- au moins un moyen de répétition comporte des moyens d'effectuer une amplification sans translation de fréquence du signal reçu du moyen stationnaire,
- l'interface air utilisée est une interface de type CDMA (de l'anglais « Code Division Multiple Access) »,
- et au moins un terminal utilisateur comporte des moyens de gérer l'arrivée de deux signaux comportant des différences de délai et de Doppler.

Dans ce cas, préférentiellement, les moyens de gérer l'arrivée de deux signaux comportant des différences de délai et de Doppler, du terminal utilisateur sont un récepteur de type « Rake », bien connu de l'homme de l'art.

Selon un mode alternatif de réalisation :
- l'interface air est de type TDMA,
- le système utilise deux signaux distincts : un pour les moyens stationnaires et un pour les moyens de répétition,
- un multiplexage temporel est utilisé pour répartir la capacité entre les moyens stationnaires et les moyens de répétition avec des intervalles de garde et une pré-compensation du Doppler au niveau des moyens de répétition.

Avantageusement, au moins un terminal utilisateur comporte des moyens d'utiliser la diversité spatiale ou des techniques MIMO (Multiple Input Multiple Output) pour recombiner les signaux provenant à la fois d'un moyen stationnaire et d'un moyen de répétition.

Selon un autre mode de réalisation,
- au moins un moyen de répétition LEO relaie le signal, de manière transparente ou régénérative, sans translation de fréquence du signal reçu
- et l'interface air comporte des moyens de limiter les interférences au niveau d'un terminal utilisateur, entre les signaux provenant d'un moyen stationnaire GEO et les signaux relayés par un moyen de répétition LEO.

Selon un second mode de réalisation,
- au moins un moyen de répétition LEO relaie le signal, de manière transparente ou régénérative, dans un canal adjacent, avant sa réémission,
- et le système de communications comporte une entité de coordination pour coordonner les plans de fréquences entre les moyens stationnaires GEO et les moyens de répétition LEO.

L'invention vise sous un second aspect un procédé de télécommunication, destiné au transfert de données à bas débit entre deux utilisateurs, situés sensiblement à la surface d'un corps céleste, le premier utilisateur étant doté d'un terminal utilisateur, en vue d'au moins un moyen de répétition et le moyen de répétition étant en vue d'au moins un moyen stationnaire, le procédé utilisant un système de télécommunications tel qu'exposé,

le procédé comprenant notamment des étapes dans lesquelles :
- le terminal du premier utilisateur émet un premier signal montant, représentatif des données à transmettre, vers le moyen de répétition,
- le moyen de répétition, reçoit et amplifie le premier signal émis par le terminal utilisateur au sol et le transmet sous forme d'un second signal montant vers le moyen stationnaire dans la même bande de fréquence, le moyen stationnaire assurant la bonne transmission finale des données à transmettre vers le second utilisateur.

L'invention vise également un procédé de télécommunication, destiné au transfert de données à bas débit entre deux utilisateurs, situés sensiblement à la surface d'un corps céleste, le second utilisateur étant doté d'un second terminal utilisateur en vue d'au moins un moyen de répétition et le moyen de répétition étant en vue d'au moins un moyen stationnaire, le procédé utilisant un système de télécommunications tel qu'exposé,

le procédé comprenant notamment des étapes dans lesquelles :
- le moyen stationnaire retransmet un signal, représentatif des données à transmettre, reçu d'un premier utilisateur, vers le moyen de répétition sous forme d'un premier signal descendant,
- le moyen de répétition, reçoit et amplifie le premier signal descendant émis par le moyen stationnaire, et le transmet au terminal du second utilisateur au sol dans la même bande de fréquence sous forme d'un second signal descendant.

On comprend que les deux parties du procédé peuvent être utilisées conjointement.

Préférentiellement, la réutilisation des fréquences entre les différentes composantes du système de communications est réalisée de manière coordonnée pour minimiser les interférences intra-système.

En effet, les deux constellations, l'une en orbite basse et l'autre en orbite géostationnaire, utilisent ici dans la plus large mesure possible le même spectre disponible préférentiellement en bande L (entre 0.9 et 2.0 GHz) mais toutes les bandes allouées réglementairement aux services de télécommunications par satellites depuis les bandes basses par exemple UHF ou VHF, jusqu'aux hautes fréquences telles que les bandes Ka ou Q peuvent être envisagées.

L'invention vise sous d'autres aspects un moyen de répétition et un terminal utilisateur pour système de communications tel qu'exposé.

Les caractéristiques préférentielles ou particulières, et les avantages de ce moyen de répétition et de ce terminal utilisateur étant identiques à ceux du système tel que succinctement exposé ci-dessus, ces avantages ne sont pas rappelés ici.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- figure 1 : l'architecture générale du système ;
- figure 2 : illustration des positions des satellites LEO et GEO sur un planisphère, à un instant donné ;
- figure 3 : un tableau des ordres de grandeur de délais entre les signaux d'un satellite GEO et d'un satellite LEO pour différentes altitudes d'orbites LEO ;
- figure 4 : les zones de couverture des satellites LEO et GEO de la constellation décrite.

### Description détaillée d'un mode de réalisation de l'invention

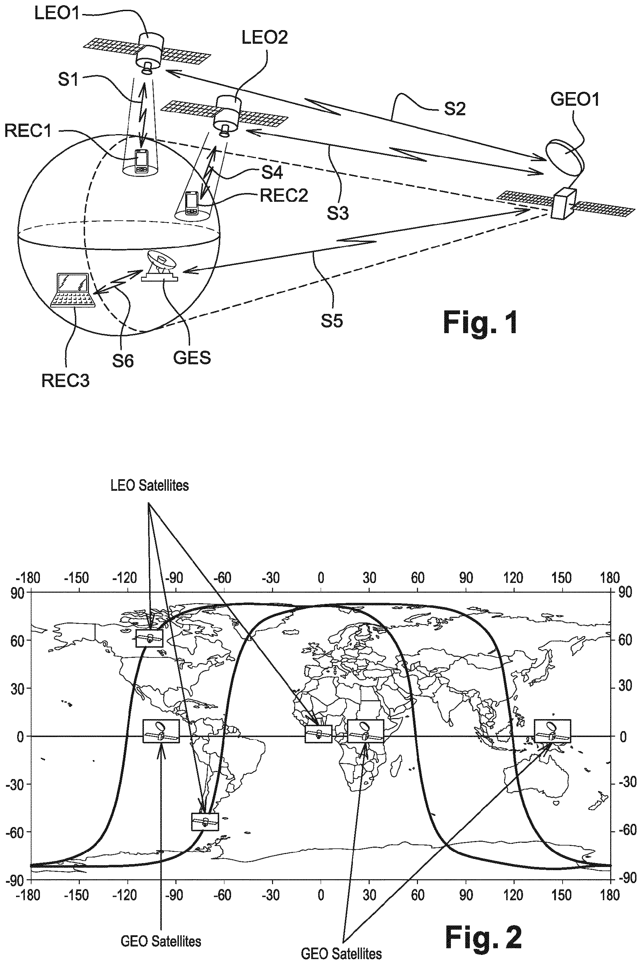

L'architecture du système est illustrée par les figures 1 et 2. Comme on le voit sur ces figures, le système proposé utilise deux constellations de satellites. La première constellation est composée d'un ou plusieurs satellites géostationnaires (également appelés GEO dans la suite de la description).

Dans le cas présent, le système décrit ici à titre d'exemple nullement limitatif, est basé sur une constellation de trois satellites géostationnaires GEO1, GEO2, GEO3 placés en orbite géostationnaire au dessus des trois zones continentales principales (par exemple aux longitudes 265°E, 25°E, 145°E respectivement, tel qu'illustré figure 2). Les satellites géostationnaires GEO1, GEO2, GEO3 opèrent dans la bande dite MSS L (1.5 / 1.6 GHz).

La constellation des satellites géostationnaires GEO1, GEO2, GEO3 est contrôlée par une ou plusieurs stations de contrôle terrestres, disposées en vue des satellites géostationnaires GEO1, GEO2, GEO3 qu'elles contrôlent, lesquelles effectuent les fonctions de contrôle et télécommande. La constellation des satellites géostationnaires GEO1, GEO2, GEO3 est connectée aux réseaux de télécommunication terrestre par une ou plusieurs stations de connexion terrestres GES, disposées en vue des satellites géostationnaires GEO1, GEO2, GEO3 via un lien FL (de l'anglais Feeder Link), de façon connue en soi.

Le système est complété par une seconde constellation de trois satellites défilants en orbite basse ou moyenne (satellites dits LEO ou MEO), avec des orbites d'altitudes comprises typiquement entre 400 et 20000 km, agissant comme répéteurs spatiaux. Il est clair que le système peut utiliser un nombre plus grand ou plus faible de satellites dans chacune des constellations LEO et géostationnaire, la différence étant une couverture de la Terre plus ou moins complète.

Dans l'exemple décrit ici, les satellites défilants sont supposés de type évoluant en orbite basse (dite LEO), et placés en orbite héliosynchrone à une altitude de 567 km avec une inclinaison de 97.7° dans trois plans orbitaux différents (avec des ascensions droites du noeud ascendant à 0°, 60° et 120°). On rappelle que l'orbite héliosynchrone est définie par le fait que chaque satellite repasse, après plusieurs orbites, en vue d'un même point de la Terre à la même heure solaire locale. Le présent système utilise trois satellites en orbite basse : LEO1, LEO2, LEO3, dont les traces des orbites sont illustrées sur la figure 2 à titre d'exemple nullement limitatif. Dans cet exemple, ces trois satellites en orbite basse LEO1, LEO2, LEO3, pourraient être des charges utiles embarquées en "passager" sur des satellites dont la charge utile principale est dédiée à une autre mission telle que, par exemple, l'observation de la Terre.

Il est clair que la constellation de satellites défilants LEO1, LEO2, LEO3, peut comprendre des satellites évoluant sur des orbites d'altitudes ou d'inclinaisons différentes.

Ces satellites en orbite basse LEO1, LEO2, LEO3, opèrent dans la même bande de fréquences que les satellites géostationnaires GEO1, GEO2, GEO3, et dans le cas présent, dans la bande MSS L (1.5 / 1.6 GHz).

Le système de communication s'adresse à tout utilisateur, notamment mobile à la surface de la Terre, et doté d'un terminal d'émission / réception REC1, émettant ou recevant des données de ou vers un autre utilisateur, éventuellement lui-même doté d'un terminal d'émission / réception REC2, et également éventuellement mobile à la surface de la Terre. L'utilisateur REC3 peut également être connecté à un réseau terrestre (IP, PSTN, ...) et être connecté à l'utilisateur REC1 via la GES.

Chaque terminal utilisateur REC1 et REC2, est un terminal transportable, comportant notamment une interface utilisateur, par exemple de type clavier, écran tactile ou liaison de données vers un équipement électronique, une batterie et / ou des moyens d'alimentation, un processeur et / ou une électronique de contrôle, des moyens de mémorisation de programmes ou de données, et des moyens d'émission et de réception de signaux, fonctionnant dans la bande de fréquence MSS L, dans le présent exemple décrit ici à titre nullement limitatif.

Chaque terminal utilisateur REC1 et REC2, est doté dans le présent exemple d'une antenne omnidirectionnelle, adaptée à recevoir des signaux émanant indifféremment d'un quelconque des satellites en orbite basse LEO1, LEO2, LEO3, ou d'un quelconque des satellites en orbite géostationnaire GEO1, GEO2, GEO3.

Dans la mise en oeuvre décrite ici, chaque terminal utilisateur REC1 et REC2, comporte pour la voie aller un récepteur de type « Rake », bien connu de l'homme de l'art. On rappelle qu'un récepteur Rake est un récepteur radio, conçu originellement pour compenser l'atténuation due aux trajets multiples d'ondes radio pour les systèmes terrestres. Il est basé sur le concept que les signaux réfléchis peuvent être distingués (typiquement dans le cas d'une utilisation d'une technique de multiplexage CDMA) et ainsi peuvent être combinés de façon adaptée en tirant alors avantage des multiples propagations. Pour la voie retour, les satellites GEO sont supposés transparents et le récepteur Rake est positionné au niveau des GES (stations de connexion des satellites GEO).

Il est cependant à noter que, dans le cas où les satellites GEO seraient de type régénératifs, il serait nécessaire qu'ils embarquent un récepteur Rake (en remplacement du récepteur placé au niveau de la GES).

### Mode de fonctionnement

Une communication entre deux terminaux utilisateurs REC1, REC2, supposés en vue de deux satellites en orbite basse LEO1, LEO2 respectivement, et d'un même satellite géostationnaire GEO1, comporte plusieurs étapes, ainsi que schématisé sur la figure 1 :
- le premier terminal utilisateur REC1 émet un premier signal S1 vers le premier satellite en orbite basse LEO1,
- le satellite en orbite basse LEO1, reçoit et amplifie le signal S1 émis par le terminal utilisateur REC1 au sol et le transmet sous forme de signal S2 vers le satellite géostationnaire GEO1,
- le satellite en orbite géostationnaire GEO1 reçoit le signal S2 et si les conditions le permettent le signal S1 et les retransmets sous forme de signal S3 vers le second satellite en orbite basse LEO2, soit directement (avec un routage à bord du satellite) soit par l'intermédiaire de la station de connexion GES. Les signaux S1 et S2 sont traités au moyen d'un récepteur Rake soit à bord (dans l'hypothèse d'un routage bord) soit au niveau de la station GES (cette solution est préférée pour des raisons de simplification de l'implémentation).
- le satellite en orbite basse LEO2, reçoit et amplifie le signal S3 émis par le satellite en orbite géostationnaire GE01 et le transmet sous forme de signal S4 au terminal utilisateur REC2 au sol.
- le terminal utilisateur REC2 reçoit le signal S4 et potentiellement le signal S3 si les conditions le permettent. Un récepteur Rake permet de recombiner ces deux signaux au niveau du terminal utilisateur.

Dans un cas impliquant des terminaux utilisateurs en vue de deux satellites géostationnaires différents GEO1, GEO2, le lien entre les deux terminaux utilisateurs comporte en outre un segment de communication entre ces satellites, par exemple mais de façon non limitative, par l'intermédiaire des stations de connexion GES et de liens sol ou par l'intermédiaire d'un lien direct inter-satellite GEO, s'il existe.

On comprend naturellement qu'il est également envisageable de réaliser une communication d'un utilisateur REC1 disposant d'un terminal émetteur / récepteur mobile, avec un autre utilisateur REC3 connecté au travers d'un réseau de télécom terrestre « classique » (PSTN, IP, ...) via la station de connexion GES.

Dans ce cas :
- le premier terminal utilisateur REC1 émet un premier signal S1 vers le premier satellite en orbite basse LEO1,
- le satellite en orbite basse LEO1, reçoit et amplifie le signal S1 émis par le terminal utilisateur REC1 au sol et le transmet sous forme de signal S2 vers le satellite géostationnaire GEO1,
- le satellite en orbite géostationnaire GE01 reçoit le signal S2 et potentiellement le signal S1 et le retransmets sous forme de signal S5 vers la station de connexion GES.
- la station de connexion GES reçoit le signal S5, (en combinant lorsque cela est nécessaire les signaux S1 et S2 contenus dans S5 au moyen d'un récepteur Rake) et le transmet sous forme de signal S6 au terminal utilisateur REC3 au sol via un réseau terrestre classique.

On note que, sur la figure 1, les liens directs entre les terminaux utilisateurs REC1, REC2 et REC3 et le satellite géostationnaire GE01 ne sont pas figurés afin de simplifier la figure.

Différentes approches peuvent être envisagées pour le répéteur spatial embarqué sur un satellite en orbite basse LEO1, LEO2, LEO3:
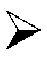 Soit, préférentiellement, une simple amplification sans translation de fréquence du signal reçu du satellite géostationnaire GEO. Cependant, ceci implique l'utilisation d'une interface air capable de supporter l'arrivée de deux signaux comportant quelques différences de délai et de Doppler. C'est par exemple le cas d'une interface air de type CDMA -Code Division Multiple Access-associée à un récepteur Rake.
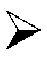 Soit, alternativement, l'utilisation de deux signaux distincts (un pour le satellite GEO et un pour le satellite LEO). Il est par exemple possible d'utiliser une interface air de type TDMA (Time Division Multiple Access), connue en soi, en envisageant soit un multiplexage temporel pour répartir la capacité entre les satellites LEO et GEO (avec des intervalles de garde et une pré-compensation du Doppler au niveau du satellite défilant LEO), ou l'utilisation de deux sous-canaux (un pour le satellite GEO et un pour le satellite LEO).

Dans la mise en oeuvre décrite ici à titre d'exemple, la première approche a été sélectionnée car elle offre une solution simple et efficace.

Elle exploite en effet la diversité des satellites puisque les signaux venant tant des satellites LEO que GEO peuvent être combinés dans un récepteur Rake pour obtenir un meilleur rapport signal sur bruit. Cette technique, d'amélioration du rapport signal sur bruit, permet d'obtenir un taux d'erreur de transmission ("bit error rate") plus bas, une plus faible puissance transmise EIRP (Effective Isotropically Radiated Power), ou une plus grande marge dans le bilan de liaison.

Par ailleurs, pour un terminal utilisateur REC1, en vue simultanément d'un satellite en orbite basse LEO1 et d'un satellite géostationnaire GEO1, si les conditions de propagation entraînent la perte d'un lien vers l'un des satellites sur lesquels il est connecté (en raison de l'évolution de la géométrie du lien avec le LEO variant en fonction du temps, ou en raison d'obstacles dans la ligne de visée de l'un des deux satellites LEO1 et GEO1), l'autre lien peut permettre de maintenir la communication.

Ce concept de simple amplification sans translation de fréquence du signal reçu du satellite GEO, peut être mis en oeuvre grâce à la possibilité offerte par le récepteur Rake, inclus dans le terminal utilisateur REC1, REC2, de combiner différents signaux venant des différents chemins en provenance d'un satellite en orbite basse LEO et d'un satellite en orbite géostationnaire GEO.

Dans le scénario de communications de données par satellite, qui fait l'objet de la présente mise en oeuvre, la composante multi-trajets est généralement négligeable. Dans ce cas, le récepteur Rake est utilisé simplement pour combiner plusieurs signaux directs en provenance de plusieurs satellites LEO et GEO, puisque les différents signaux peuvent être considérés comme des composants de "trajets multiples" fictifs.

Les signaux reçus peuvent alors être combinés dans le terminal utilisateur REC1, REC2 selon trois algorithmes principaux, connus de l'homme de l'art et donc non décrits plus avant ici : par sélection du meilleur signal (connu sous le terme anglais de « selection combining »), par simple combinaison égale des signaux (connu sous le terme anglais de « equal gain combining »), ou recombinaison pondérée des signaux pour maximiser le rapport signal à bruit total (connu sous le terme anglais de « maximal ratio combining »). Le dernier algorithme (Maximum Ratio Combining) est la solution préférée car il est le plus performant en termes de rapport signal à bruit obtenu.

Une des questions essentielles liées à la combinaison de signaux est que chaque voie suivie a une longueur éventuellement très différente en raison de la position relative des éléments : utilisateur - satellite LEO - satellite GEO. Afin d'équilibrer la différence de temps de propagation, qui varie également dans le temps, des buffers de données appropriés doivent être prévus au niveau du récepteur Rake. Le dimensionnement de ces buffers dépend de la différence de délai dans le pire cas entre les différents chemins, et du débit maximum de transfert de données utilisé.

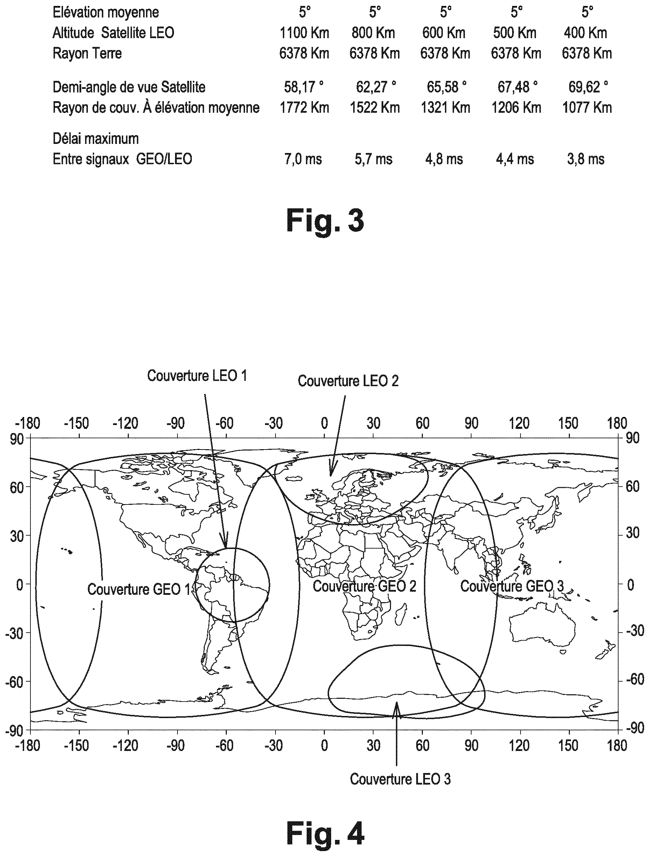

Dans le système proposé, la différence de temps reste inférieure à 5 ms pour la constellation de satellites défilants LEO1, LEO2, LEO3 envisagée. Le tableau de la figure 3 donne quelques ordres de grandeur de délais pour différentes altitudes d'orbites LEO par rapport à un satellite GEO.

Il convient également de noter que les services de communication envisagés pour le système selon l'invention, sont des transmissions à faible débit de données. De ce fait, la taille du buffer de données nécessaire reste raisonnable.

Avec cette approche utilisant un récepteur Rake, dans le cas d'une technique de multiplexage CDMA, les satellites LEO et GEO partagent bien la même bande de fréquence (bande MSS L dans le présent exemple) sans générer d'interférences dommageables.

La planification des fréquences et les questions de couverture doivent également être prises en considération, puisque les zones de couverture LEO et GEO doivent être coordonnées pour assurer un fonctionnement correct du système. Dans l'approche proposée, la couverture des satellites GEO est composée d'un faisceau global couvrant l'intégralité de la surface visible de la Terre. Cette approche permet d'éviter ou de limiter les procédures de transfert pour les satellites LEO (connues par l'homme de l'art sous le terme « hand over ») entre différents faisceaux provenant d'un (ou plusieurs) satellites GEO. La couverture LEO est donc incluse dans la couverture du GEO comme l'illustre la figure 4. Les satellites LEO relaient donc simplement les signaux des satellites GEO sous lesquels ils sont situés.

Dans l'exemple ci-dessus:
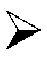 Le satellite LEO1 relaie les signaux de et vers le satellite GEO1.
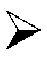 Les satellites LEO2 et LEO3 relaient les signaux de et vers le satellite GEO 2.
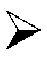 Il n'y a pas de satellite LEO dans la couverture du satellite GEO3 à l'instant illustré par la figure 4. En fait, le satellite LEO3 est, à ce moment, connecté au satellite GEO2.

Au fur et à mesure qu'un satellite LEO quelconque se déplace dans la zone de couverture des satellites GEO, il peut être en visibilité de différents satellites GEO. Toutefois, on suppose qu'à un instant donné il est connecté à un satellite géostationnaire unique. Lorsque plusieurs satellites GEO sont dans la zone de visibilité des satellites défilants LEO, différentes stratégies peuvent être adoptées pour le choix du satellite GEO auquel le LEO doit se raccrocher (par exemple sur un critère du meilleur signal reçu au niveau du satellite LEO, ou un critère géométrique de minimisation de la distance entre LEO et GEO qui est prédictible par avance sur la base des éphémérides des satellites). Dans l'exemple ci-dessus le satellite LEO est connecté au satellite GEO fournissant le meilleur signal reçu.

Avec ces hypothèses, il n'est pas nécessaire de concevoir de stratégies complexes de planification de fréquences et tous les satellites (les trois satellites GEO et les trois satellites LEO) peuvent opérer par exemple sur un unique canal CDMA.

Contrairement à l'approche de l'art antérieur de type Orbcomm ou Argos, le système proposé est en mesure de fournir des communications de données bidirectionnelles, basées sur le fait que le satellite GEO relaie les communications des satellites LEO.

Selon cette approche, dès que le terminal utilisateur REC1, REC2 est dans la zone de couverture d'un satellite défilant LEO1, LEO2, LEO3, il est possible de communiquer de façon bidirectionnelle et en temps réel avec lui. Il n'y a plus d'exigence de visibilité simultanée par le satellite défilant LEO1, LEO2, LEO3, du terminal utilisateur REC1, REC2 et d'une station de connexion sol, ce qui permet alors d'envisager une couverture complète de la Terre.

Le délai, pour communiquer avec un terminal utilisateur REC1 au sol est alors uniquement fonction de la fréquence de passage des satellites en orbite défilante LEO1, LEO2, LEO3, qui dépend directement de l'orbite choisie pour ces satellites et du nombre de ces satellites (pouvant aller jusqu'à une couverture continue de l'ensemble de la terre).

### Avantages de l'invention

Grâce à la combinaison d'une constellation de satellites défilants LEO (qui permet de fournir un service plus performant aux régions polaires) et d'une constellation GEO (qui fournit un service de qualité aux régions équatoriales et aux basses latitudes), la durée moyenne de non visibilité d'un satellite pour un terminal utilisateur REC1, REC2 se trouve annulée ou fortement réduite par rapport aux systèmes de l'art antérieur, notamment lorsque de forts angles d'élévation sont recherchés (dans le cas des communications mobiles par satellite le facteur de blocage du signal est réduit à forte élévation ce qui conduit à une meilleure disponibilité du service).

On comprend qu'un système tel que décrit fournit ainsi une disponibilité nettement accrue pour les utilisateurs amenés à évoluer dans des zones reculées et peu couvertes par les systèmes de communications traditionnels.

D'autres avantages de la solution retenue apparaissent particulièrement bien lorsqu'on la compare aux solutions existantes, utilisant soit des satellites en orbite basse, soit des satellites géostationnaires, soit des constellations hybrides.
1/ Comparé à une solution de communications par satellite employant une constellation de satellites en orbite basse (tels que Orbcomm ou Argos par exemple), les avantages procurés par l'invention sont multiples.
   Il n'est pas nécessaire de déployer de stations de connexion pour les communications entre les satellites en orbite basse LEO et l'infrastructure réseau terrestre. En effet, la station de connexion du ou des satellites GEO garantissent un accès permanent aux satellites en orbite basse LEO.
   Il n'est pas nécessaire de déployer des stations de Télécommande / Télémesure & Contrôle (TT&C) de la constellation de satellites en orbite basse, les signaux de TT&C étant également relayés par le ou les satellites GEO. On comprend que le contrôle des satellites en orbite basse est effectué, depuis le sol, par les stations de contrôles des satellites stationnaires, à travers ces satellites GEO1, GEO2, GEO3.
   La conception des satellites en orbite basse est nettement simplifiée (fonction simplifiée de relais placée en orbite)
2/ Comparé à une solution de communications par satellite employant un satellite géostationnaire, les avantages procurés par l'invention sont :
   Une extension de la couverture du satellite géostationnaire pour couvrir par exemple les zones polaires
      Une amélioration des performances du bilan de liaison permettant par exemple la miniaturisation des terminaux utilisateurs, la réduction de la puissance consommée par les terminaux (moins de puissance pour clore le bilan de liaison donc plus d'autonomie de batterie pour les terminaux opérant sur batteries) ou amélioration des débits et de la disponibilité
      Un temps de latence réduit pour l'accès au réseau et pour la réception d'accusé de réception.
3/ Comparé à un système (inclus dans l'état de la technique) de télécommunications par satellite hybride comprenant un ou plusieurs satellites géostationnaires et une constellation de satellites en orbite basse, les avantages procurés par l'invention sont :
   L'utilisation d'un protocole commun entre les deux systèmes, plus efficace que chaque protocole pris séparément.

Une mutualisation de la bande de fréquence utilisée, avec des mécanismes assurant que les interférences intra-système sont limitées.

Du fait de sa conception, le concept est particulièrement adapté aux terminaux utilisateur ayant une faible directivité et ne nécessitant pas le maintien du pointage en direction des satellites en orbite basse. En effet, il suffit que le terminal utilisateur pointe vers un satellite GEO ou LEO pour assurer la communication.

Les applications envisagées concernent l'amélioration des futurs systèmes mobiles par satellites géostationnaires (MSS -Mobile Satellite Services-), incluant les services mobiles aéronautiques par satellites tels que AMSS (Aeronautical Mobile Satellite Service) et AMSRS (Aeronautical Mobile Satellite Route Services), en bande UHF, L, S, C ou X s'appuyant sur le déploiement d'une constellation en orbite basse beaucoup moins complexe que les constellations MSS existantes (telles que Globalstar ou Iridium) pour des communications de type voix, données ou des échanges de messages de machine-à-machine (M2M).

Ce concept peut également s'appliquer aux systèmes de diffusion mobile par satellite de données, télévision ou radio (par exemple la diffusion radio au standard S-DAB utilisant une allocation BSS en bande L ou la diffusion de télévision mobile au standard DVB-SH utilisant une allocation MSS en bande S).

Une autre utilisation de ce concept concerne les échanges de données pour des applications de navigation (maritime ou aéronautique, notamment). Dans ces applications, connues de l'homme du métier sous le nom SBAS (de l'anglais "Satellite Based Augmentation System"), il n'existé pas actuellement de moyen de couvrir les mobiles situés au voisinage des pôles. L'invention permet de remédier à ce problème avec un satellite en orbite géostationnaire, et un satellite en orbite basse défilant en vue du mobile.

De même, toute couverture d'une zone d'ombre de dispositifs de communications traditionnels est éventuellement possible, dès lors que cette zone peut venir en vue d'un satellite en orbite basse ou d'un moyen défilant.

L'utilisation d'un système ou d'un procédé de télécommunications, conformes à l'invention permet donc d'étendre la zone de couverture de moyens de communication comportant des zones d'ombre, et notamment d'étendre la zone de couverture d'un système SBAS utilisant un satellite géostationnaire.

Dans le cas où le répéteur spatial transmet dans un canal adjacent à celui du satellite GEO et de façon régénérative, un atout de l'invention concerne la possibilité d'une éventuelle simplification des protocoles d'échanges entre les terminaux utilisateurs et les satellites LEO. Les satellites LEO peuvent notamment réaliser une conversion vers un protocole d'échanges spécifique pour le GEO (pour tenir compte, par exemple, des contraintes de délai de propagation propres au GEO), ou une agrégation des messages et une optimisation de l'utilisation de la bande passante.

Un autre attrait important de ce concept est la possibilité d'avoir une liaison permanente et quasi temps réel entre le réseau de contrôle et de mission et la constellation de satellites LEO au travers de la station de connexion et du relais GEO.

On comprend par ailleurs que le système ne nécessite pas obligatoirement le déploiement d'une constellation de satellites LEO ou GEO dédiée. Il est en effet possible d'utiliser des capacités de transmission disponibles sur des constellations de satellites GEO déjà existantes. On choisit dans ce cas naturellement la bande de fréquences de la constellation GEO utilisée comme bande de fréquence de travail des satellites LEO. Ceci permet de résoudre le problème du peu de bandes de fréquences disponibles pour les services mobiles par satellite utilisant des satellites non-géostationnaires, et cela offre donc un intérêt réglementaire pour le déploiement d'une constellation de satellites LEO opérant à titre secondaire dans la même bande fréquence que le (ou les) satellites GEO.

De même, les fonctions envisagées pour les satellites LEO peuvent en fait être réalisées au moyen des charges utiles embarquées comme passagers sur des satellites LEO dédiés principalement à d'autres fonctions. Dans ce cas, le critère déterminant est l'orbite envisagée pour le satellite LEO. Un choix avantageux est celui de satellites d'observation de la Terre, qui utilisent fréquemment une orbite héliosynchrone très inclinée, et couvrant donc les latitudes élevées. Cette mise en oeuvre des charges utiles en tant que passagers, et naturellement très avantageuse en termes de coût de déploiement du système.

Le système décrit ici constitue donc une solution simple et économique en comparaison d'autres alternatives possibles telles que :
1/ le déploiement d'un grand nombre de stations sols pour offrir une connexion permanente entre les satellites LEO et le sol, qui est une solution coûteuse et complexe à implémenter en particulier pour couvrir les océans (la constellation Globalstar est une bonne illustration de cette difficulté);
2/ l'utilisation de liaisons inter-satellites pour offrir une connexion permanente entre les satellites LEO et un nombre limité de stations sols. Cette solution a l'inconvénient d'ajouter de la complexité et un surcoût au niveau du segment spatial (la constellation Iridium est une bonne illustration de cette solution).

### Variantes de l'invention

L'utilisation de la diversité spatiale (ou des techniques MIMO) au niveau du terminal utilisateur pour recombiner les signaux provenant à la fois du satellite GEO et du satellite LEO peut être envisagée afin d'améliorer le bilan de liaison de manière supplémentaire.

Le répéteur satellite peut être un simple répéteur analogique « transparent » qui est la solution la plus simple mais impose des contraintes de design sur l'interface air de façon à limiter les interférences au niveau du terminal entre les signaux provenant du satellite GEO et les signaux relayés par le satellite LEO.

Une solution alternative consiste à relayer le signal (de manière transparente ou régénérative) dans un sous-canal d'une même bande à bord du satellite relais. Cette solution nécessite une entité de coordination pour coordonner les plans de fréquences entre les satellites GEO et LEO.

La constellation de satellites relais peut également implanter des fonctionnalités additionnelles (store & forward, agrégations de signaux).

La constellation de satellites répéteurs peut offrir une couverture globale ou partielle de la Terre selon les objectifs visés.

La constellation de satellites répéteurs peut offrir une couverture continue dans le temps (pour des services temps réels disponibles à tout instant) ou seulement un accès avec un certain délai (pour des services non temps réels) utilisant des constellations avec un nombre réduit de satellites.

Il est également clair que le concept décrit, utilisant la même bande de fréquences pour les communications entre les terminaux de surface et les moyens de répétition et pour les communications entre les moyens de répétition et les moyens stationnaires, peut s'appliquer seulement sur la voie aller ou sur la voie retour ou dans les deux sens.

## Revendications

1. Système de télécommunications, destiné au transfert de données à bas débit entre au moins deux utilisateurs situés sensiblement à la surface d'un corps céleste, comprenant :
au moins un terminal émetteur / récepteur REC de surface associé chacun à un utilisateur,
un ou plusieurs moyens stationnaires GEO au dessus de la surface du corps céleste, ces moyens stationnaires étant aptes à transmettre de données de et vers une zone de couverture déterminée en vue du moyen stationnaire,
et un ou plusieurs moyens de répétition de signaux pour des signaux émis et/ou reçus depuis les moyens stationnaires GEO et les terminaux de surface REC, ces moyens de répétition défilant au dessus de la surface du corps céleste,
**caractérisé en ce qu'**un même spectre de fréquence dans la bande S est utilisé pour les communications entre les terminaux de surface et les moyens de répétition et pour les communications entre les moyens de répétition et les moyens stationnaires.

2. Système de télécommunications selon la revendication 1, **caractérisé :**
- **en ce qu'**il comporte au moins une station sol de connexion (GES) des moyens stationnaires GEO,
- et **en ce que** les communications entre les moyens de répétition et un opérateur terrestre, sont assurés par l'intermédiaire des moyens stationnaires GEO et des stations sol de connexion GES.

3. Système de télécommunications selon la revendication 1 ou 2, **caractérisé en ce qu'**au moins un moyen stationnaire GEO est embarqué sur un satellite placé en orbite géostationnaire autour du corps céleste.

4. Système de télécommunications selon l'une quelconque des revendications 1 à 3, **caractérisé en ce qu'**au moins un moyen de répétition est embarqué sur un satellite évoluant en orbite basse défilante autour du corps céleste.

5. Système de télécommunications selon l'une quelconque des revendications précédentes, **caractérisé en ce qu'**au moins un moyen de répétition est embarqué sur un satellite évoluant en orbite polaire autour du corps céleste.

6. Système de télécommunications selon l'une quelconque des revendications précédentes, **caractérisé en ce que** le spectre de fréquences est également utilisé pour des communications directes entre des terminaux utilisateurs REC et au moins un moyen stationnaire GEO.

7. Système de télécommunications selon l'une quelconque des revendications précédentes, **caractérisé :**
- **en ce qu'**au moins un moyen de répétition comporte des moyens d'effectuer une amplification sans translation de fréquence du signal reçu du moyen stationnaire GEO,
- **en ce que** l'interface air utilisée est une interface de type CDMA,
- et **en ce qu'**au moins un terminal utilisateur REC1 comporte des moyens de gérer l'arrivée de deux signaux comportant des différences de délai et de Doppler.

8. Système de télécommunications selon la revendication 7, **caractérisé en ce que** les moyens de gérer l'arrivée de deux signaux comportant des différences de délai et Doppler, du terminal utilisateur REC1 sont un récepteur de type Rake.

9. Système de télécommunications selon l'une quelconque des revendications 1 à 8, **caractérisé :**
- **en ce qu'**au moins un moyen de répétition est un répéteur analogique « transparent »,
- et **en ce que** l'interface air comporte des moyens de limiter les interférences au niveau d'un terminal utilisateur REC, entre les signaux provenant d'un moyen stationnaire GEO et les signaux relayés par un moyen de répétition.

10. Système de télécommunications selon l'une quelconque des revendications 1 à 8, **caractérisé :**
- **en ce qu'**au moins un moyen de répétition relaie le signal, de manière transparente ou régénérative, dans un canal adjacent, avant sa réémission,
- et **en ce que** le système de communications comporte une entité de coordination pour coordonner les plans de fréquences entre les moyens stationnaires GEO et les moyens de répétition.

11. Procédé de télécommunication, destiné au transfert de données à bas débit entre deux utilisateurs, situés sensiblement à la surface d'un corps céleste, le premier utilisateur étant doté d'un terminal utilisateur, en vue d'au moins un moyen de répétition et le moyen de répétition étant en vue d'au moins un moyen stationnaire, le procédé utilisant un système de télécommunications selon l'une quelconque des revendications 1 à 10
**caractérisé en ce que** le procédé comprend notamment des étapes dans lesquelles :
- le terminal du premier utilisateur émet un premier signal montant, dans le spectre de fréquence utilisé à la fois pour les communications entre les terminaux de surface et les moyens de répétition et pour les communications entre les moyens de répétition et les moyens stationnaires, représentatif des données à transmettre, vers le moyen de répétition,
- le moyen de répétition, reçoit et amplifie le premier signal émis par le terminal utilisateur au sol et le transmet sous forme d'un second signal montant vers le moyen stationnaire dans ledit spectre de fréquence, le moyen stationnaire assurant la bonne transmission finale des données à transmettre vers le second utilisateur.

12. Procédé de télécommunication, destiné au transfert de données à bas débit entre deux utilisateurs, situés sensiblement à la surface d'un corps céleste, le second utilisateur étant doté d'un second terminal utilisateur en vue d'au moins un moyen de répétition et le moyen de répétition étant en vue d'au moins un moyen stationnaire, le procédé utilisant un système de télécommunications selon l'une quelconque des revendications 1 à 10.
**caractérisé en ce que** le procédé comprend notamment des étapes dans lesquelles :
- le moyen stationnaire retransmet un signal, représentatif des données à transmettre, reçu d'un premier utilisateur éventuellement via la station de connexion GES, vers le moyen de répétition sous forme d'un premier signal descendant, dans le spectre de fréquence utilisé à la fois pour les communications entre les terminaux de surface et les moyens de répétition et pour les communications entre les moyens de répétition et les moyens stationnaires
- le moyen de répétition, reçoit et amplifie le premier signal descendant émis par le moyen stationnaire, et le transmet au terminal du second utilisateur au sol dans ledit spectre de fréquence sous forme d'un second signal descendant.

13. Procédé de télécommunication **caractérisé en ce qu'**il met en oeuvre des procédés selon les revendications 11 et 12.

## Patentansprüche

1. Telekommunikationssystem, das für die Übertragung von Daten mit niedriger Bitrate zwischen mindestens zwei Benutzern, die sich im Wesentlichen an der Oberfläche eines Himmelskörpers befinden, bestimmt ist, umfassend:
mindestens ein Oberflächen-Sende/Empfangsterminal REC, das jeweils einem Benutzer zugeordnet ist,
ein oder mehrere stationäre Mittel GEO über der Oberfläche des Himmelskörpers, wobei diese stationären Mittel geeignet sind, Daten von und zu einer bestimmten Abdeckungszone im Hinblick auf das stationäre Mittel zu übertragen,
und ein oder mehrere Signalwiederholungsmittel für Signale, die von den stationären Mitteln GEO und den Oberflächenterminals REC gesandt und/oder empfangen werden, wobei diese Wiederholungsmittel über der Oberfläche des Himmelskörpers ablaufen,
**dadurch gekennzeichnet, dass** ein selbes Frequenzspektrum in dem Band S für die Kommunikationen zwischen den Oberflächenterminals und den Wiederholungsmitteln und für die Kommunikationen zwischen den Wiederholungsmitteln und den stationären Mitteln verwendet wird.

2. Telekommunikationssystem nach Anspruch 1, **dadurch gekennzeichnet:**
- **dass** es mindestens eine Anschlussbodenstation (GES) der stationären Mittel GEO umfasst,
- und **dass** die Kommunikationen zwischen den Wiederholungsmitteln und einem terrestrischen Betreiber mit Hilfe der stationären Mittel GEO und der Anschlussbodenstationen GES gewährleistet werden.

3. Telekommunikationssystem nach Anspruch 1 oder 2, **dadurch gekennzeichnet, dass** mindestens ein stationäres Mittel GEO in einen Satelliten eingebaut ist, der in einer geostationären Umlaufbahn um den Himmelskörper angeordnet ist.

4. Telekommunikationssystem nach einem der Ansprüche 1 bis 3, **dadurch gekennzeichnet, dass** mindestens ein Wiederholungsmittel in einen Satelliten eingebaut ist, der sich in einer nicht stationären niedrigen Umlaufbahn um den Himmelskörper bewegt.

5. Telekommunikationssystem nach einem der vorhergehenden Ansprüche, **dadurch gekennzeichnet, dass** mindestens ein Wiederholungsmittel in einen Satelliten eingebaut ist, der sich in einer polaren Umlaufbahn um den Himmelskörper bewegt.

6. Telekommunikationssystem nach einem der vorhergehenden Ansprüche, **dadurch gekennzeichnet, dass** das Frequenzspektrum auch für direkte Kommunikationen zwischen Benutzerterminals REC und mindestens einem stationären Mittel GEO verwendet wird.

7. Telekommunikationssystem nach einem der vorhergehenden Ansprüche, **dadurch gekennzeichnet:**
- **dass** mindestens ein Wiederholungsmittel Mittel umfasst, um eine Verstärkung ohne Frequenztranslation des von dem stationären Mittel GEO empfangenen Signals durchzuführen,
- **dass** die verwendete Luftschnittstelle eine Schnittstelle vom Typ CDMA ist,
- **dass** mindestens ein Benutzerterminal REC1 Mittel umfasst, um die Ankunft von zwei Signalen, die Frist- und Doppler-Unterschiede umfassen, zu steuern.

8. Telekommunikationssystem nach Anspruch 7, **dadurch gekennzeichnet, dass** die Mittel des Benutzerterminals REC1 zur Steuerung der Ankunft von zwei Signalen, die Frist- und Doppler-Unterschiede umfassen, ein Empfänger vom Rake-Typ sind.

9. Telekommunikationssystem nach einem der Ansprüche 1 bis 8, **dadurch gekennzeichnet:**
- **dass** mindestens ein Wiederholungsmittel ein "transparenter" Analog-Repeater ist,
- und **dass** die Luftschnittstelle Mittel umfasst, um die Interferenzen im Bereich eines Benutzerterminals REC zwischen den Signalen, die von einem stationären Mittel GEO kommen, und den Signalen, die durch ein Wiederholungsmittel weitergeleitet werden, zu begrenzen.

10. Telekommunikationssystem nach einem der Ansprüche 1 bis 8, **dadurch gekennzeichnet:**
- **dass** mindestens ein Wiederholungsmittel das Signal auf transparente oder regenerative Weise in einen angrenzenden Kanal weiterleitet, bevor es wieder gesandt wird,
- und **dass** das Kommunikationssystem eine Koordinationseinheit umfasst, um die Frequenzebenen zwischen den stationären Mitteln GEO und den Wiederholungsmitteln zu koordinieren.

11. Telekommunikationsverfahren, das für die Übertragung von Daten mit niedriger Bitrate zwischen zwei Benutzern, die sich im Wesentlichen an der Oberfläche eines Himmelskörpers befinden, bestimmt ist, wobei der erste Benutzer mit einem Benutzerterminal versehen ist, im Hinblick auf mindestens ein Wiederholungsmittel, und wobei das Wiederholungsmittel im Hinblick auf mindestens ein stationäres Mittel ist, wobei das Verfahren ein Telekommunikationssystem nach einem der Ansprüche 1 bis 10 verwendet,
**dadurch gekennzeichnet, dass** das Verfahren insbesondere die folgenden Schritte umfasst, bei denen:
- das Terminal des ersten Benutzers ein erstes aufsteigendes Signal in dem Frequenzspektrum, das sowohl für die Kommunikationen zwischen den Oberflächenterminals und den Wiederholungsmitteln als auch für die Kommunikationen zwischen den Wiederholungsmitteln und den stationären Mitteln verwendet wird, entsendet, welches für die zu dem Wiederholungsmittel zu übertragenden Daten repräsentativ ist,
- das Wiederholungsmittel das erste von dem Benutzerterminal am Boden entsandte Signal empfängt und verstärkt und es in Form eines zweiten aufsteigenden Signals zu dem stationären Mittel in dem Frequenzspektrum überträgt, wobei das stationäre Mittel die richtige endgültige Übertragung der zu dem zweiten Benutzer zu übertragenden Daten gewährleistet.

12. Telekommunikationsverfahren, das für die Übertragung von Daten mit niedriger Bitrate zwischen zwei Benutzern, die sich im Wesentlichen an der Oberfläche eines Himmelskörpers befinden, bestimmt ist, wobei der zweite Benutzer mit einem zweiten Benutzerterminal versehen ist, im Hinblick auf mindestens ein Wiederholungsmittel, und wobei das Wiederholungsmittel im Hinblick auf mindestens ein stationäres Mittel ist, wobei das Verfahren ein Telekommunikationssystem nach einem der Ansprüche 1 bis 10 verwendet,
**dadurch gekennzeichnet, dass** das Verfahren insbesondere die folgenden Schritte umfasst, bei denen:
- das stationäre Mittel ein Signal, das für die zu übertragenden Daten repräsentativ ist, das von einem ersten Benutzer eventuell über die Anschlussstation GES empfangen wird, zu dem Wiederholungsmittel in Form eines ersten absteigenden Signals in dem Frequenzspektrum, das sowohl für die Kommunikationen zwischen den Oberflächenterminals und den Wiederholungsmitteln als auch für die Kommunikationen zwischen den Wiederholungsmitteln und den stationären Mitteln verwendet wird, zurück überträgt,
- das Wiederholungsmittel das erste absteigende Signal, das von dem stationären Mittel entsandt wird, empfängt und verstärkt und es an das Terminal des zweiten Benutzers am Boden in dem Frequenzspektrum in Form eines zweiten absteigenden Signals überträgt.

13. Telekommunikationsverfahren, **dadurch gekennzeichnet, dass** es Verfahren nach den Ansprüchen 11 und 12 einsetzt.

## Claims

1. Telecommunications system, intended for low-throughput data transfer between at least two users located substantially on the surface of a celestial body, comprising:
at least one transmitting/receiving surface terminal REC, each associated to a user,
one or more stationary means GEO above the surface of the celestial body, these stationary means being able to transmit data from and to a predetermined coverage area with a line of sight to the stationary means,
and one or more signal repetition means for signals transmitted and/or received from the stationary means GEO and the surface terminals REC, said repetition means traveling above the surface of the celestial body,
**characterized in that** a same frequency spectrum in the S band is used for communications between the surface terminals and the repetition means and for communications between the repetition means and the stationary means.

2. Telecommunications system according to claim 1, **characterized:**
- **in that** it comprises at least one ground connection station (GES) for the GEO stationary means,
- and **in that** communications between the repetition means and a terrestrial operator are performed via the GEO stationary means and GES connection stations.

3. Telecommunications system according to claim 1 or 2, **characterized in that** at least one stationary means GEO is installed on board a satellite placed in geostationary orbit around the celestial body.

4. Telecommunications system according to any one of claims 1 to 3, **characterized in that** at least one repetition means is installed on board a satellite moving in low orbit traveling around the celestial body.

5. Telecommunications system according to any one of the preceding claims, **characterized in that** at least one repetition means is installed on board a satellite moving in a polar orbit around the celestial body.

6. Telecommunications system according to any one of the preceding claims, **characterized in that** the frequency spectrum is also used for direct communications between the user terminals REC and at least one stationary means GEO.

7. Telecommunications system according to any one of the preceding claims, **characterized:**
- **in that** at least one repetition means comprises means of performing an amplification without frequency translation of the signal received from the stationary means GEO,
- **in that** the air interface used is a CDMA type of interface,
- and **in that** at least one user terminal REC1 comprises means of managing the arrival of two signals bearing Doppler and delay differences.

8. Telecommunications system according to claim 7, **characterized in that** the means of managing the arrival of two signals comprising Doppler and delay differences of user terminal REC1 are a Rake type of receiver.

9. Telecommunications system according to any one of claims 1 to 8, **characterized:**
- **in that** at least one repetition means is a "transparent" analog repeater,
- and **in that** the air interface comprises means of limiting interference at a user terminal REC between the signals from a GEO stationary means and the signals relayed by a repetition means.

10. Telecommunications system according to any one of claims 1 to 8, **characterized:**
- **in that** at least one repetition means relays the signal, in a transparent or regenerative way, in an adjacent channel, before its retransmission,
- and **in that** the communications system comprises a coordination entity for coordinating the frequency plans between the GEO stationary means and the repetition means.

11. Telecommunications method, intended for low-throughput data transfer between two users located substantially on the surface of a celestial body; the first user being equipped with a user terminal, with a line of sight to at least one repetition means, and the repetition means having a line of sight to at least one stationary means, the method using a telecommunications system according to any one of claims 1 to 10,
**characterized in that** the method comprises in particular steps in which:
- the first user's terminal transmits a first uplink signal, in the frequency spectrum used for both communications between the surface terminals and the repetition means and communications between the repetition means and the stationary means, representative of data to be transmitted, to the repetition means,
- the repetition means receives and amplifies the first signal transmitted by the user terminal on the ground and transmits it in the form of a second uplink signal to the stationary means in said frequency spectrum; the stationary means ensuring the good final transmission of data to the second user.

12. Telecommunications method, intended for low-throughput data transfer between two users located substantially on the surface of a celestial body; the second user being equipped with a second user terminal, with a line of sight to at least one repetition means, and the repetition means having a line of sight to at least one stationary means, the method using a telecommunications system according to any one of claims 1 to 10,
**characterized in that** the method comprises in particular steps in which:
- the stationary means retransmits a signal, representative of data to be transmitted, received from a first user possibly via the GES connection station, to the repetition means in the form of a first downlink signal, in the frequency spectrum used for both communications between the surface terminals and the repetition means and communications between the repetition means and the stationary means
- the repetition means receives and amplifies the first downlink signal transmitted by the stationary means and transmits it to the second user's terminal on the ground in said frequency spectrum in the form of a second downlink signal.

13. Telecommunications method **characterized in that** it utilizes methods according to claims 11 and 12.
